# EUROPEAN PATENT SPECIFICATION

(11) **EP 2 480 401 B1**
(45) Date of publication and mention of the grant of the patent: **23.09.2015**
(21) Application number: 12710121.0
(22) Date of filing: 29.02.2012
(51) Int. Cl.: B29C 73/04, B29C 65/34, B29C 65/56, B29C 73/34

(54) **A METHOD FOR REPAIRING A COMPONENT MADE OF A PLASTIC MATERIAL**
VERFAHREN ZUR REPARATUR EINER KOMPONENTE AUS EINEM KUNSTSTOFFMATERIAL
PROCÉDÉ DE RÉPARATION D'UNE PIÈCE EN PLASTIQUE

(30) Priority: 24.05.2011 IT BO20110299
(43) Date of publication of application: 01.08.2012
(73) Proprietor: Mongiorgi, Raffaele, 40133 Bologna (IT); Albertini, Roberto, 41100 Modena (IT)
(72) Inventor: Mongiorgi, Raffaele, 40133 Bologna (IT); Albertini, Roberto, 41100 Modena (IT)
(74) Representative: Bergadano, Mirko
(86) International application number: PCT/IB2012/050944
(87) International publication number: WO 2012/066522

(56) References cited:
- AU-B2- 667 829
- DE-A1- 3 125 393
- US-A- 2 974 566
- US-A- 3 734 795

## Description

### FIELD OF THE INVENTION

The invention relates to the technical sector of repairs; in particular the present invention relates to a method for repairing a component made of a plastic material.

### DESCRIPTION OF THE PRIOR ART

As is known, it can happen that a vehicle, for example a motor vehicle, following an impact and/or an accident, is subject to damage to a relative component made of a plastic material, for example the bumpers.

In some_ cases this damage can generate one or more cracks in the plastic component, i.e. it can cause a separation of two or more parts thereof; in other cases, it can cause real through-openings in the component, as parts thereof can detach following an impact.

Generally if the damage has generated a crack in the vehicle component, the relative repair aims at re-joining the two parts of the component that have separated, while if the damage has generated an opening, this must be covered by a second component made of a plastic material which is fixed to the component of the vehicle.

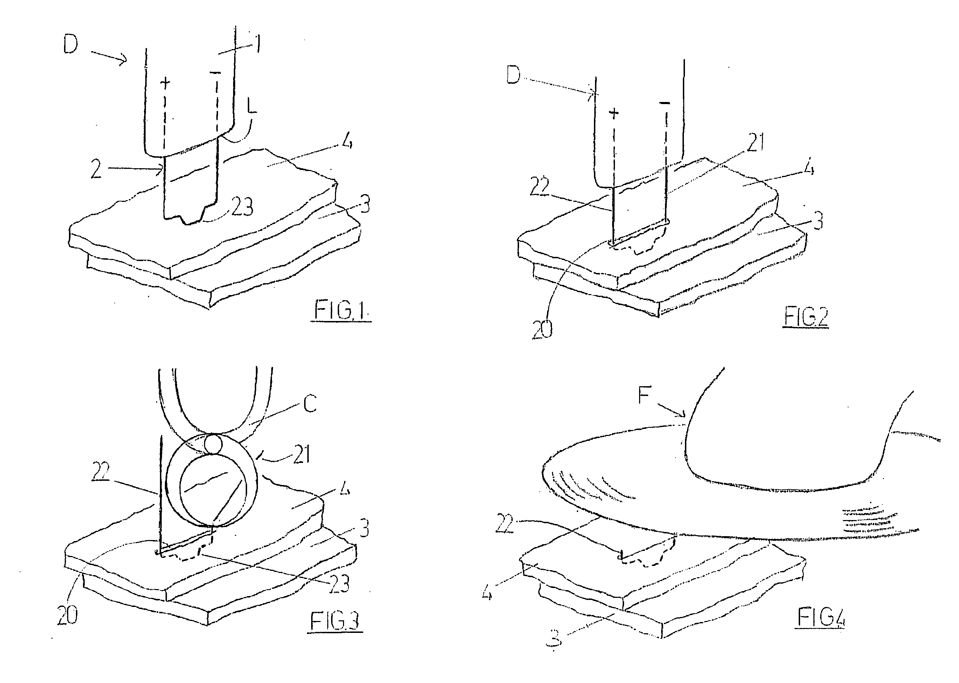

In order to carry out these repair operations, usually an electrical device D of known type is used, illustrated schematically in figures 1 and 2; this device D comprises a main body 1 (partially illustrated), comprising internally thereof an open circuit; a fixing element 2 made of a conductor material, i.e. a metal wire (for example made of stainless steel) is removably coupled to the device D.

The main body 1 further exhibits two seatings (not visible in the accompanying figures) at a relative side L, which develop in depth internally of the main body 1.

The fixing element 2, on the other hand, substantially exhibits a U-profile, i.e. it exhibits a first and a second side 21, 22 which are parallel to one another, and a base 23.

In order to couple the fixing element 2 to the device D, the free ends of the first and the second side 21, 22 have to be inserted in the two seatings, such as to close the circuit of the main body 1, and such that at least the base 23 of the fixing element 2 projects from the main body 1 (see figure 1).

The above-described device D can be activated such that once the fixing element 2 is inserted in the seatings of the main body 1, circuit internally thereof generates an electrical current; the current passes through the fixing element 2, increasing the temperature thereof.

With reference to accompanying figures 1-4, a known repair method will now be described of a plastic component 3 (illustrated partially and schematically) of a vehicle by means of the above-described device D. In particular, the situation represented in figures 1 to 4 relates to the repairing of a plastic component of a vehicle in which damage has caused a through-opening in the component 3.

As mentioned herein above, in this case the first thing to do is arrange a second plastic component 4 above the component 3 of the vehicle, such as completely to cover the opening (not visible in the accompanying figures).

Once the fixing element is coupled to the main body 1 of the device D, the device is activated such that the circuit internally thereof generates an electric current: the electric current flows through the fixing element 2 until the fixing element 2 reaches a predetermined temperature necessary for softening the plastic material of the component 3 of the vehicle and the second component 4.

The fixing element 2 is then arranged resting by the base 23 thereof on the second member 4 (see figure 1); by applying a pressure via the main body 1 it is possible to cause the base 23 of the fixing element 2 to penetrate internally of the second component 4 and also of the component 3 of the vehicle (see figure 2): in fact, the temperature reached by the fixing element 2 causes local melting of the plastic material it is placed in contact with.

In order to guarantee a stable fixing between the second component 4 and the component 3 of the vehicle, the base 23 of the fixing element 2 can exhibit an undulated profile (as shown in accompanying figures 1-4), or can exhibit projections and recesses which enable it to involve, in the same way, both the component 3 to be repaired, which is underlying, and the second component 4, which is on the surface.

Following the cooling of the plastic material, the second component 4 and the component 3 of the vehicle are reciprocally fixed.

If the damage has, differently, caused a crack in the plastic material of the vehicle, the base of the fixing element is made to penetrate internally of the component in such a way as to involve both parts between which the crack has been generated (not illustrated in the figures).

At this point the device D can be deactivated and the fixing element 2 disengaged from the seatings of the main body 1.

Thereafter the portions of the first and second side 21, 22 are broken, i.e. the portions which project from the second component 4; for this purpose shears C, for example, as illustrated in figure 3, are used.

During this last operation, however, the cut ends of the first and the second sides 21, 22 remain projecting from the external surface of the second component 4: thus a milling cutter F is required to remove the remaining projecting portions (see figure 4).

Finally, other work operations are carried out, such as for example that of covering, using paste, the crack 20 generated in the plastic material following insertion of the fixing element 2, and painting the thus-repaired component.

However the method of known type described above exhibits some drawbacks.

In fact, the operations necessary for repairing a plastic component using the above-described method are expensive in terms of time used. For these operations, as described above, multiple steps are required.

Further, the final milling operation often does not guarantee complete elimination of the portions remaining projecting from the external surface of the second component; this can cause a risk to the operators who are performing the subsequent operations, who may not notice the presence of small projecting portions and injure themselves. In some cases, also, it is necessary to repeat the milling step.

### SUMMARY OF THE INVENTION

The aim of the present invention is to obviate the above-cited drawbacks.

The aim is attained by providing a repair method of a component made of plastic material according to claim 1.

According to claim 1, the method disclosed comprises steps of: arranging a first member made of plastic and a second member made of plastic near to one another; raising a temperature of a fixing element to a value such that the fixing element can penetrate into both the first member and the second member by causing a local melting of the plastic material respectively of the first member and the second member; causing the heated fixing element to penetrate into the first member and into the second member such as to realise a fixing of the second member to the first member; the method further comprising the step of weakening the fixing element at least in a region thereof, before causing the heated fixing element to penetrate into the first member and into the second member; and wherein the heated fixing element is caused to penetrate into the first member and the second member in such a way that the weakened region is internal of the first member or the second member; the method further comprising a further step of breaking the fixing element at the weakened region.

The repair method advantageously enables a reduction in times necessary for repairing a plastic component with respect to the prior art.

The step of weakening the fixing element at least at a region thereof facilitates breakage of the fixing element after it has been made to penetrate into the plastic material.

Further, the fact that the heated fixing element is made to penetrate into the first member and the second member such that the weakened region is internal of the first member or the second member leads to various advantages.

On the one hand this specification obviates the milling operation required in the prior art, with a further reduction in the times required for repair; and on the other hand the operators handling subsequent operations will not get injured thanks to the complete removal of the projecting parts of the fixing elements towards the outside of the component to be repaired, as often happened in the prior art.

In particular this method can be used, for example, for repairing a plastic component of a vehicle.

### BRIEF DESCRIPTION OF THE DRAWINGS

Specific embodiments of the invention, and advantageous technical-functional characteristics correlated to these embodiments only in part derivable from the above description will be described in the following in the present description, in accordance with what is reported in the claims and with the aid of the tables of the accompanying drawings, in which:
figures 1-4 schematically illustrate the steps of a method of known type for repairing a component made of a plastic material;
figures 5 and 6 illustrate two different embodiments of the method of the invention, respectively in a section view and in plan view;
figure 7 illustrates a partial and enlarged view of the embodiment of figure 5;
figure 7A is an illustration in enlarged view of detail K of figure 7;
figure 8 is a partial and perspective view of a fixing element usable in the method of the present invention;
figure 9 illustrates a step of the method of the invention in a partial and perspective view;
figure 10 illustrates the step of figure 9 in a partial view and in section.

### DESCRIPTION OF THE PREFERRED EMBODIMENTS

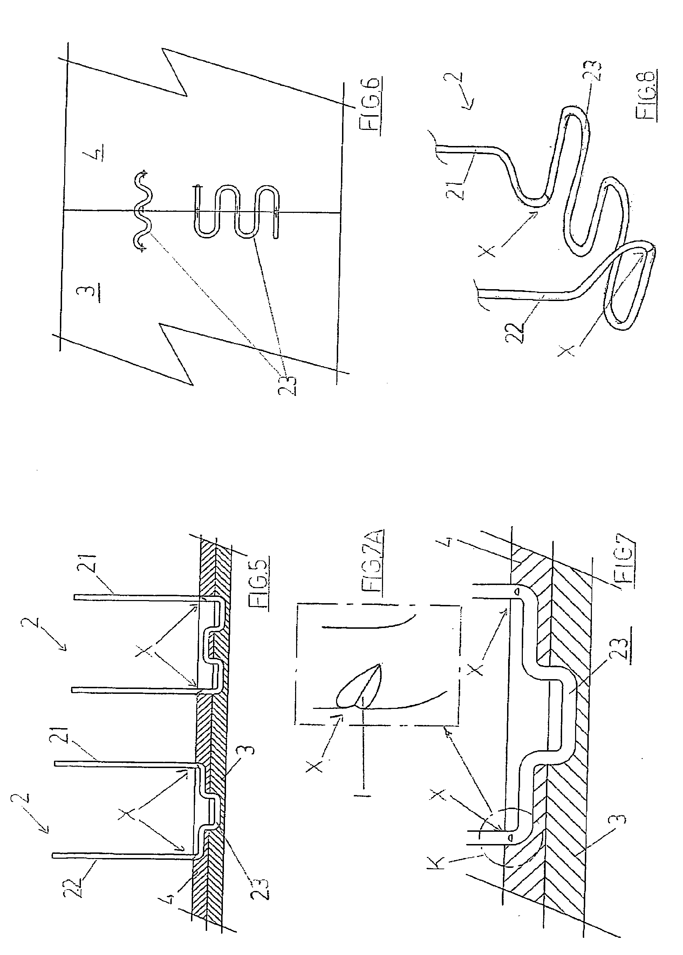

With reference to figures 5-10, the repair method of a plastic component of the invention comprises steps of: arranging a first member 3 made of plastic and a second member 4 made of plastic near to one another; raising a temperature of a fixing element 2 to a value such that the fixing element 2 can penetrate both the first member 3 and the second member 4 by causing a local melting of the plastic material respectively of the first member 3 and the second member 4; causing the heated fixing element 2 to penetrate into the first member 3 and into the second member 4 such as to realise a fixing of the second member 4 to the first member 3 (see for example figures 5, 7).

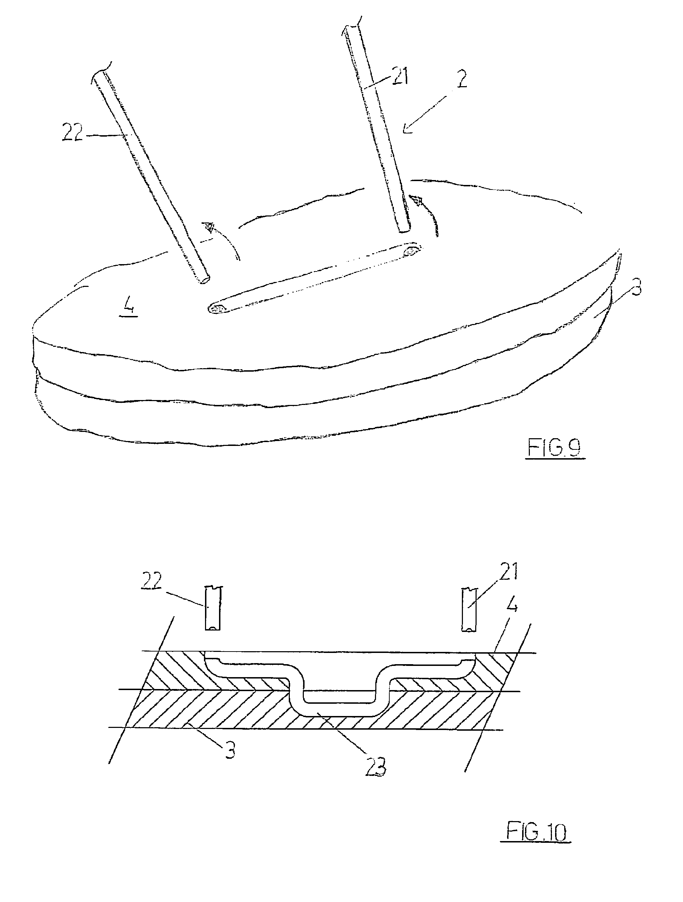

The method further comprises the step of weakening the fixing element 2 at least at a relative region X thereof, before causing the heated fixing element 2 to penetrate into the first member 3 and the second member 4; the heated fixing element is made to penetrate into the first member 3 and the second member 4 such that the weakened region X is internal of the first member 3 or the second member 4 (see figure 7); the method further comprising the step of breaking the fixing element 2 at the weakened region X (see figures 9, 10).

The proposed method is for example usable for repairing a plastic component of a vehicle.

In particular, the first member 3 made of plastic material and the second member 4 made of plastic material can be respectively a first component and a second component. This situation can arise when a through-opening (not illustrated) has been generated in the first member 3, for example due to an impact, or when the first member 3 has been subjected to a thinning-out.

In particular, in this case, in order to realise the above-described repair operations, the first member 3 and the second member 4 can be arranged such as to be superposed (see figure 5, 7, 9, 10); therefore, the fixing element 2 is made to penetrate for example first the second member 4 (arranged on the surface) and then the first member 3 (arranged at a depth).

Alternatively, the first plastic member 3 and the second plastic member 4 can be a part of the same component. In this case, for example, the first member 3 and the second member 4 can be an integral part of the same bumper of a car in which a crack that has separated the two members 3, 4 has been generated.

In this situation, in order to perform the repair of the component, the first member 3 and the second member 4 can be arranged such as to be flanked to one another (see figure 6), such that the fixing element can penetrate into the first member 3 and the second member 4 at the same time.

In an embodiment of the invention, the step of weakening the fixing element 2 occurs before the step of raising the temperature of the fixing element 2.

In particular, the step can be carried out preferably during the production of the fixing element 2; the step of weakening the fixing element 2 can further consist in realising at least an incision I at the region X to be weakened (see figure 7A).

In a preferred embodiment of the invention, the fixing element 2 comprises a conductor material of the electric current, and the step of raising the temperature of the fixing element 2 is done by subjecting the fixing element 2 to an electric current.

In particular, the fixing element 2 can be made of stainless steel; advantageously with this specification the fixing element 2 does not break while it is made to penetrate internally of the first member 3 and the second member 4.

With reference to figures 5-10, the fixing element 2 has a substantial U-shape, i.e. it comprises two opposite sides 21, 22 and a base 23 which joins the sides 21, 22.

In this case, the fixing element 2 is weakened at two regions X, such that after the step of breaking at least the base 23 remains internal of the first member 3 and the second member 4 (see figure 6).

In particular, figures 9 and 10 illustrate the step of breaking the fixing element 2 following cooling of the plastic material of the first member 3 and the second member 4, according to the above-described embodiment; this step of breaking can advantageously be performed for example manually, by bending or twisting the first and the second side 21, 22 up to the point of breakage, with a saving in terms of time with respect to the prior art.

In particular this step of breakage generates three portions from the fixing element 2: a first portion which comprises the cut part of the first side 21, a second portion which comprises the cut part of the second side 22 and a third portion which comprises the base 23 and a part of the first side 21 and the second side 22.

In detail the step of breaking is done in such a way that the third portion is internal of the second member 4, i.e. such that the third portion does not project from the external surface of the second member 4.

Therefore, as the cut ends of the third portion remain internally of the plastic material, it is no longer necessary to perform the further step of milling, required in the prior art in order to remove the portions that remained projecting.

In order to guarantee a stabler fixing of the first member 3 to the second member 4, a plurality of fixing elements 2 can be penetrated into the said first and second members 3, 4 (see figures 5, 6).

Further, in a preferred embodiment, the base 23 of the fixing element 2 can exhibit an undulated profile (as shown in figures 5-8 and 10), i.e. the base 23 can exhibit projections and recesses which enable the fixing element to involve both the first member 3 and the second member 4 in the same way.

In an embodiment of the invention, the steps of raising the temperature of the fixing element 2 and to cause the fixing element to penetrate internally of the first member 3 and the second member 4 can be realised for example by an electrical device D of known type, schematically illustrated in figures 1 and 2.

The electrical device D comprises a main body 1 (partially illustrated), internally comprising an open circuit and two seatings (not visible in the accompanying tables of drawings) at a side L thereof, which seatings develop in depth internally of the main body 1 itself; the fixing element 2 can be removably coupled to the device by inserting the free ends of the first and second side 21, 22 internally of the two seatings, such that at least the base 23 of the fixing element 2 projects from the main body 1 (see figure 1), thus closing the circuit internally of the main body 1.

The above-described device D can be activated such that once the free ends of the fixing element 2 are inserted in the seatings of the main body 1, the circuit generates an electric current internally thereof; the current then runs through the fixing element 2, increasing the temperature thereof up to reaching the value required for softening the plastic material of the first member 3 and the second member 4 (i.e. able to cause a relatively local melting, once in contact with the fixing element 2), thus enabling the fixing element 2 to be penetrated into the first member 3 and the second member 4, by applying a pressure via the main body 1.

Following cooling of the plastic material, the fixing element 2 can be disengaged from the device D and the user can proceed to breaking the fixing element, as described herein above.

## Claims

1. A method for repairing a component made of a plastic material, comprising steps of:
arranging a first member (3) made of plastic and a second member (4) made of plastic near to one another;
raising a temperature of a fixing element (2) to a value such that the fixing element (2) can penetrate both the first member (3) and the second member (4) by causing a local melting of the plastic material respectively of the first member (3) and the second member (4);
causing the heated fixing element (2) to penetrate into the first member (3) and into the second member (4) such as to realise a fixing of the second member (4) to the first member (3);
the method being **characterised in that**:
it comprises a step of weakening the fixing element (2) at least in a region (X) thereof, before causing the heated fixing element (2) to penetrate into the first member (3) and into the second member (4);
the heated fixing element (2) is caused to penetrate into the first member (3) and the second member (4) in such a way that the weakened region (X) is internal of the first member (3) or the second member (4);
the method comprising a further step of breaking the fixing element (2) at the weakened region (X).

2. The method for repairing of the preceding claim, wherein the step of weakening the fixing element (2) consists in realising at least an incision (I) in the region (X).

3. The method for repairing of any one of the preceding claims, wherein the step of weakening the fixing element (2) is done before the step of raising the temperature of the fixing element (2).

4. The method for repairing of any one of the preceding claims, wherein the fixing element (2) comprises a conductor material of electrical current, and wherein the step of raising the temperature of the fixing element (2) is performed by subjecting the fixing element (2) to an electrical current.

5. The method for repairing of any one of the preceding claims, wherein the fixing element (2) has substantially a U-shape, comprising two sides (21, 22) that are reciprocally opposite and a base (23); and wherein the fixing element (2) is weakened at two regions (X), such that after the step of breaking at least the base (23) remains internal of the first member (3) and the second member (4).

6. The method for repairing of any one of the preceding claims, wherein the first member (3) and the second member (4) are respectively a first component and a second component and are arranged such as to be reciprocally superposed.

7. The method for repairing of any one of the preceding claims from 1 to 5, wherein the first member (3) and the second member (4) are respectively a first part and a second part of a component and are arranged such as to be flanked.

## Patentansprüche

1. Verfahren zum Reparieren einer Komponente aus einem Kunststoffmaterial, umfassend die Schritte:
Anordnen eines ersten Glieds (3) aus Kunststoff und eines zweiten Glieds (4) aus Kunststoff nahe beieinander;
Erhöhen einer Temperatur eines Fixier- bzw. Befestigungselements (2) auf einen Wert derart, dass das Fixier- bzw. Befestigungselement (2) sowohl das erste Glied (3) als auch das zweite Glied (4) penetrieren kann, indem ein lokales Schmelzen des Kunststoffmaterials jeweils des ersten Glieds (3) und des zweiten Glieds (4) bewirkt wird;
Veranlassen, dass das erwärmte Fixier- bzw. Befestigungselement (2) in das erste Glied (3) und in das zweite Glied (4) penetriert, um eine Fixierung bzw. Befestigung des zweiten Glieds (4) an dem ersten Glied (3) zu realisieren;
wobei das Verfahren **dadurch gekennzeichnet ist, dass**:
es einen Schritt des Schwächens des Fixier- bzw. Befestigungselements (2) zumindest in einer Region (X) davon umfasst, bevor das erwärmte Fixier- bzw. Befestigungselement (2) veranlasst wird, in das erste Glied (3) und in das zweite Glied (4) zu penetrieren;
das erwärmte Fixier- bzw. Befestigungselement (2) veranlasst wird, in das erste Glied (3) und das zweite Glied (4) auf eine solche Weise zu penetrieren, dass die geschwächte Region (X) intern bzw. innerhalb des ersten Glieds (3) oder des zweiten Glieds (4) ist;
wobei das Verfahren einen weiteren Schritt des Brechens des Fixier- bzw. Befestigungselements (2) an der geschwächten Region (X) umfasst.

2. Verfahren zum Reparieren nach dem vorhergehenden Anspruch, wobei der Schritt des Schwächens des Fixierelements (2) im Realisieren zumindest eines Einschnitts (I) in der Region (X) besteht.

3. Verfahren zum Reparieren nach einem der vorhergehenden Ansprüche, wobei der Schritt des Schwächens des Fixierelements (2) vor dem Schritt des Erhöhens der Temperatur des Fixierelements (2) durchgeführt wird.

4. Verfahren zum Reparieren nach einem der vorhergehenden Ansprüche, wobei das Fixierelement (2) ein Leitermaterial für elektrischen Strom umfasst, und wobei der Schritt des Erhöhens der Temperatur des Fixierelements (2) durchgeführt wird, indem das Fixierelement (2) einem elektrischen Strom ausgesetzt wird.

5. Verfahren zum Reparieren nach einem der vorhergehenden Ansprüche, wobei das Fixierelement (2) im Wesentlichen eine U-Form aufweist, umfassend zwei Seiten (21, 22), die reziprok bzw. wechselseitig gegenüberliegend bzw. entgegensetzt sind, und eine Basis (23); und wobei das Fixierelement (2) an zwei Regionen (X) geschwächt wird, so dass nach dem Schritt des Brechens zumindest die Basis (23) intern bzw. innerhalb des ersten Glieds (3) und des zweiten Glieds (4) bleibt.

6. Verfahren zum Reparieren nach einem der vorhergehenden Ansprüche, wobei das erste Glied (3) und das zweite Glied (4) jeweils eine erste Komponente und eine zweite Komponente sind und so angeordnet sind, dass sie reziprok bzw. wechselseitig überlagert sind.

7. Verfahren zum Reparieren nach einem der vorhergehenden Ansprüche 1 bis 5, wobei das erste Glied (3) und das zweite Glied (4) jeweils ein erster Teil und ein zweiter Teil einer Komponente sind und so angeordnet sind, dass sie flankiert sind.

## Revendications

1. Procédé de réparation d'un composant fait d'un matériau de plastique, comprenant les étapes consistant à :
disposer un premier membre (3) fait de plastique et un second membre (4) fait de plastique l'un près de l'autre ;
élever une température d'un élément de fixation (2) à une valeur telle que l'élément de fixation (2) peut pénétrer tant dans le premier membre (3) que dans le second membre (4) en provoquant une fusion locale du matériau plastique respectivement du premier membre (3) et du second membre (4) ;
faire en sorte que l'élément de fixation (2) chauffé pénètre dans le premier membre (3) et dans le second membre (4) de façon à réaliser une fixation du second membre (4) au premier membre (3) ;
le procédé étant **caractérisé en ce que** :
il comprend une étape consistant à affaiblir l'élément de fixation (2) au moins dans une région (X) de celui-ci, avant de faire en sorte que l'élément de fixation (2) chauffé ne pénètre dans le premier membre (3) et dans le second membre (4) ;
l'élément de fixation (2) chauffé est contraint à pénétrer dans le premier membre (3) et dans le second membre (4) de façon telle que la région affaiblie (X) est interne du premier membre (3) ou du second membre (4) ;
le procédé comprenant une étape supplémentaire consistant à rompre l'élément de fixation (2) au niveau de la région affaiblie (X).

2. Procédé de réparation de la revendication précédente, dans lequel l'étape consistant à affaiblir l'élément de fixation (2) consiste en la réalisation d'au moins une incision (I) dans la région (X).

3. Procédé de réparation de l'une quelconque des revendications précédentes, dans lequel l'étape consistant à affaiblir l'élément de fixation (2) est réalisée avant l'étape consistant à élever la température de l'élément de fixation (2).

4. Procédé de réparation de l'une quelconque des revendications précédentes, dans lequel l'élément de fixation (2) comprend un matériau conducteur de courant électrique, et dans lequel l'étape consistant à élever la température de l'élément de fixation (2) est réalisée en soumettant l'élément de fixation (2) à un courant électrique.

5. Procédé de réparation de l'une quelconque des revendications précédentes, dans lequel l'élément de fixation (2) a une forme essentiellement en U, comprenant deux côtés (21, 22) qui sont réciproquement opposés et une base (23) ; et dans lequel l'élément de fixation (2) est affaibli au niveau de deux régions (X), si bien qu'après l'étape de rupture, au moins la base (23) reste interne du premier membre (3) et du second membre (4).

6. Procédé de réparation de l'une quelconque des revendications précédentes, dans lequel le premier membre (3) et le second membre (4) sont respectivement un premier composant et un second composant et sont disposés de façon à être réciproquement superposés.

7. Procédé de réparation de l'une quelconque des revendications 1 à 5, dans lequel le premier membre (3) et le second membre (4) sont respectivement une première partie et une seconde partie d'un composant et sont disposés de façon à se trouver flanc contre flanc.
